# EUROPÄISCHE PATENTSCHRIFT

(11) **EP 0 925 490 B1**
(45) Veröffentlichungstag und Bekanntmachung des Hinweises auf die Patenterteilung: **05.12.2001**
(21) Anmeldenummer: 97943760.5
(22) Anmeldetag: 10.09.1997
(51) Int. Cl.: G01M 3/16

(54) **VORRICHTUNG ZUR DETEKTION UND ORTUNG VON LECKAGEFLÜSSIGKEITEN AN ABDICHTUNGSSYSTEMEN**
DEVICE FOR DETECTING AND LOCATING LEAKAGE FLUIDS IN SEALING SYSTEMS
DISPOSITIF DE DETECTION ET DE LOCALISATION DE LIQUIDES DE FUITE DANS DES SYSTEMES D'ETANCHEITE

(30) Priorität: 10.09.1996 DE 19638734
(43) Veröffentlichungstag der Anmeldung: 30.06.1999
(73) Patentinhaber: Progeo Monitoring GmbH, 14979 Grossbeeren (DE)
(72) Erfinder: RÖDEL, Andreas, D-14532 Kleinmachnow (DE)
(74) Vertreter: Meyer, Hans-Joachim, Dipl.-Ing.
(86) Internationale Anmeldenummer: DE9702045
(87) Internationale Veröffentlichungsnummer: WO9811414

(56) Entgegenhaltungen:
- WO-A-91/10889
- WO-A-94/02822
- US-A- 4 404 516
- US-A- 4 947 470
- US-A- 4 965 554
- US-A- 5 191 785

## Beschreibung

Die vorliegende Erfindung betrifft eine Vorrichtung zur Detektion und Ortung sowohl von elektrisch leitenden als auch von elektrisch nicht leitenden Leckageflüssigkeiten an Abdichtungssystemen.

Die DE 69014264 T2 beschreibt ein Verfahren zur Aufdeckung von Leckagen in einer Isolierschicht, die z.B. unterhalb einer Abfalldeponie zum Schutz des Grundwassers vor kontaminiertem Sickerwasser aus der Abfalldeponie eingebaut ist. Unter der Isolierschicht werden dabei ein erstes und ein zweites Geotextil angeordnet, die voneinander durch eine weitere Isolationsschicht getrennt sind. In die beiden Geotextilien sind elektrisch leitende, im wesentlichen parallel verlaufende Fäden eingewebt, wobei die Geotextilien derart angeordnet sind, daß die leitenden Fäden des ersten Geotextils einen Winkel von vorzugsweise 90° mit den leitenden Fäden des zweiten Geotextils bilden. Kennzeichen dieses bekannten Verfahrens ist, daß die leitenden Fäden paarweise zusammengefaßt sind, wobei der Abstand der Paare größer voneinander ist, als der Fadenabstand im Paar. Zur Detektion einer Leckage wird die elektrische Spannung und/oder der Widerstand zwischen zwei zu einem Paar gehörigen leitenden Fäden bestimmt. Der Ort der Leckage kann dabei durch eine Kreuzortung festgestellt werden.

Dieses bekannte Verfahren hat den Nachteil, daß eine Detektion einer Leckage nur sichergestellt ist, wenn die leitenden Fäden mit geringem Abstand zueinander in die Geotextilien eingewebt sind. Denn ist der Abstand der leitenden Faden relativ groß und treten aus einer undichten Stelle in der Isolierschicht nur geringe Mengen Flüssigkeit aus, so ist eine Bruckung der leitenden Faden durch die austretende Flussigkeit und damit ein Erkennen des Schadens nicht in jedem Fall sichergestellt. Da zudem nicht unterstellt werden kann, daß ein Schadensereignis stets nur die innere Isolierschicht betrifft, sondern gerade bei den in der Bauzeit verursachten Schaden sehr häufig auch die Isolationsschicht zwischen den beiden die leitenden Fäden tragenden Geotextilien oder auch die leitenden Faden selbst betroffen sind, kann unter Umständen Leckageflussigkeit in den Untergrund eintreten, ohne daß ein solches Ereignis erkannt wird.

Wird andererseits der Abstand der parallelen leitenden Fäden so klein gewahlt, daß die Detektion einer Leckage wirklich sichergestellt ist, so sind eine entsprechend hohe Anzahl von Meßkontakten an den leitenden Faden anzuschließen, was jedoch sehr aufwendig ist und daher zu relativ hohen Herstellungskosten bei einem derartigen Leckerfassungs- und -ortungsystem fuhrt.

Desweiteren wäre es wünschenswert, wenn eine Vorrichtung zur Verfügung stünde, mit der nicht nur elektrisch leitende Leckageflüssigkeiten, wie z.B. Sickerwasser, sondern auch elektrisch nicht leitende Leckageflussigkeiten, wie z.B. Heizöl, detektiert werden könnten.

Aus der EP 0372697 A2 ist bereits ein Sensor zur Detektion von Ölleckagen bekannt. Der bekannte Sensor ist jedoch nicht zur Detektion von Sickerwasser oder anderen wässrigen Leckageflüssigkeiten geeignet, da er einen Widerstand aufweist, der von einer Ummantelung aus einem porösen, wasserabweisenden Harz umgeben und selbst aus einem porösen, wasserabweisenden und elektrisch leitfähige Kohlenstoffteilchen enthaltenden Harz gebildet ist, wobei die Kohlenstoffteichen mit einer wasserabweisenden Beschichtung versehen sind.

Ferner ist aus der US 5 191 785 eine Vorrichtung zur Erfassung und Ortung einer Leckage von elektrisch leitenden Flüssigkeiten an der Innenschicht eines Behälters bekannt, dessen Wandstruktur aus mehreren Schichten aufgebaut ist. Zwischen der Behälterinnenschicht, die aus einem elektrisch nicht leitenden Material hergestellt ist, und der äußeren Behälterschale ist ein Graphit-Schleier angeordnet, der mit mehreren Meßelektroden versehen ist. Die Vorrichtung umfaßt desweiteren eine Hauptelektrode, die innerhalb des Behälters derart angeordnet ist, daß sie mit der darin befindlichen elektrisch leitenden Flüssigkeit stets in Kontakt ist. Zur Detektion und Ortung einer eventuellen Leckage an der Innenschicht des Behälters wird der Reihe nach an verschiedenen Elektrodenpaaren eine Spannungsdifferenz angelegt und jeweils gegen die Hauptelektrode gemessen, wobei ein Leck in der elektrisch nicht leitenden Innenschicht des Behälters praktisch einen Zwischenabgriff auf einem langen Widerstand darstellt, der von einem zwischen einem Elektrodenpaar befindlichen Flächenabschnitt des Graphit-Schleiers gebildet ist. Eine Detektion und Leckageortung von elektrisch nicht leitenden Flüssigkeiten ist mit dieser bekannten Vorrichtung jedoch nicht möglich.

Ausgehend von diesem Stand der Technik lag der vorliegenden Erfindung die Aufgabe zugrunde, eine Vorrichtung der eingangs genannten Art bereitzustellen, die eine sichere Detektion von Leckagen an Abdichtungssystemen sowohl in bezug auf leitende als auch in bezug auf nicht leitende Leckageflüssigkeiten gewährleistet, eine genaue Ortung einer Leckage ermöglicht und zudem kostengünstig herstellbar ist.

Diese Aufgabe wird erfindungsgemäß durch eine Vorrichtung der eingangs genannten Art gelöst, die durch ein elektrisch leitfähige Partikel und/oder Fasern aufweisendes, vollflächig an der Außenseite eines zu überwachenden Abdichtungsbereichs angeordnetes Flächengebilde gekennzeichnet ist, das einen flächenspezifischen elektrischen Widerstand aufweist, der bei Benetzung mit einer elektrisch leitenden Flüssigkeit im Bereich der Benetzung abnimmt und bei Benetzung mit einer elektrisch nicht leitenden Flüssigkeit im Bereich der Benetzung zunimmt, wobei das Flächengebilde mit einer Vielzahl von Meßkontakten versehen ist, die über eine oder mehrere Bus-Übertragungsleitungen mit einer Meß- und Auswerteeinrichtung verbunden sind, mit welcher der elektrische Widerstand des Flächengebildes meßbar und eine Änderung der örtlichen Widerstandsverteilung innerhalb des Flächengebildes ermittelbar ist.

Mit der erfindungsgemäßen Vorrichtung lassen sich Behälter sowie Abdichtungen auf die Leckage sowohl von leitfähigen als auch von elektrisch nicht leitenden Flüssigkeiten zuverlässig überwachen, wobei bereits geringe Leckageflüssigkeitsmengen detektierbar sind. Die Anzahl der hierzu erforderlichen Meßkontakte ist vergleichsweise gering, so daß die erfindungsgemäße Vorrichtung relativ kostengünstig realisierbar ist. Hierzu trägt auch die Verwendung der Bus-Übertragungsleitung bzw. -leitungen bei. Ferner ermöglicht die erfindungsgemäße Vorrichtung eine genaue Lokalisierung des Schadensortes, so daß die betreffende Leckage gezielt und mit vertretbarem Aufwand behoben werden kann. Anzahl und Abstand der Meßkontakte sind dabei zweckmäßiger Weise so zu wählen, daß die Widerstandsverteilung im Flächengebilde über dessen Gesamtfläche mit ausreichender örtlicher Auflösung ermittelt werden kann.

Die Meß- und Auswerteeinrichtung kann dabei den elektrischen Widerstand des Flächengebildes kontinuierlich oder zu vorgegebenen Zeitpunkten messen.

Die elektrisch leitfähigen Partikel und/oder Fasern des Flächengebildes bestehen vorzugsweise aus Metall und/oder leitfähigem Kohlenstoff. Die Ausrüstung des Flächengebildes, das vorzugsweise auf der Basis eines Vliesstoffes oder eines feinen, gitterartigen Netzgebildes hergestellt wird, geschieht dabei vorzugsweise in der Form, daß eine elektrische Leitung zwischen beliebigen Punkten des Flächengebildes im wesentlichen über die Oberfläche der Partikel und/oder Fasern stattfindet.

Nach einer weiteren vorteilhaften Ausgestaltung ist das Flächengebilde außenseitig mit einer flüssigkeitsdichten Beschichtung versehen. Diese Ausgestaltung ist insbesondere dann von Vorteil, wenn das zu überwachende Abdichtungssystem im Untergrund angelegt ist und damit gerechnet werden muß, daß Grund- und/oder Oberflächenwasser auf das Flächengebilde einwirkt und dadurch gegebenenfalls zu einer Änderung des elektrischen Widerstandes des Flächengebilde führt.

Eine weitere vorteilhafte Ausgestaltung besteht ferner darin, daß mindestens eine Gegenelektrode vorgesehen ist, die im Erdreich außerhalb des Abdichungssystems plaziert ist. Hierdurch läßt sich bei Vorhandensein einer flüssigkeitsdichten Beschichtung auf der Außenseite des Flächengebildes feststellen, ob die Beschichtung intakt ist oder eine Beschädigung aufweist.

Nach einer anderen vorteilhaften Ausgestaltung der Erfindung sind die Meßkontakte zur Ankopplung an das Flächengebilde jeweils mit einer Kontaktfläche aus leitfähigem Schaumstoff, vorzugsweise leitfähigem Polyurethan-Schaumstoff, versehen. Hierdurch wird eine leicht herzustellende und einwandfreie Ankopplung an das Flächengebilde erreicht. Dies gilt insbesondere bei der Verwendung von Polyurethan-Schaumstoff, der aufgrund seiner hohen Mikroverformbarkeit bei zugleich hoherer Leitfähigkeit imstande ist, das Flächengebilde mit kleinem Übergangswiderstand zwischen einer metallischen Kontaktfläche des Meßkontakts und dem Flächengebilde zu kontaktieren.

Eine weitere bevorzugte Ausgestaltung der Erfindung ist dadurch gekennzeichnet, daß die Meßkontakte auf dem Flächengebilde in flächenhafter Verteilung angeordnet sind. Hierdurch läßt sich eine genauere Ortung von Leckagen erzielen, da die Schadensortung anhand der zweidimensionalen Auswertung der Meßergebnisse nicht allein auf Segmente begrenzt ist, die zwischen am Umfang des Flachengebildes angeordneten Meßkontakten liegen, sondern mit größerer Genauigkeit auch zwischen den in flächenhafter Verteilung auf dem Flächengebilde angeordneten Meßkontakten erfolgen kann.

Zur Abfrage der Meßkontakte ist vorzugsweise ein hybrides analog-digitales Bussystem vorgesehen, dessen digitale und analoge Leitungen in Reihe geschaltet sind, wobei über den digitalen Anteil des Busses an den Meßkontakten Schalter aktivierbar sind, die die analogen Signal- und Datenleitungen mit dem jeweiligen Meßkontakt verbinden.

Die Erfindung wird nachfolgend anhand einer Ausfuhrungsbeispiele darstellenden Zeichnung näher erläutert. Es zeigen:
- Figur 1: eine schematische Darstellung eines geschnitten dargestellten Tanks, der mit einer erfindungsgemäßen Vorrichtung versehen ist;
- Figur 2: eine Draufsicht auf den Tank und die erfindungsgemäße Vorrichtung der Figur 1;
- Figur 3: eine perspektivische Ansicht eines Abschnitts eines Flächengebildes der erfindungsgemäßen Vorrichtung; und
- Figur 4: verschiedene Ansichten eines seriellen Kopplungselements zur Herstellung eines Meßkontaktes an dem Flächengebilde.

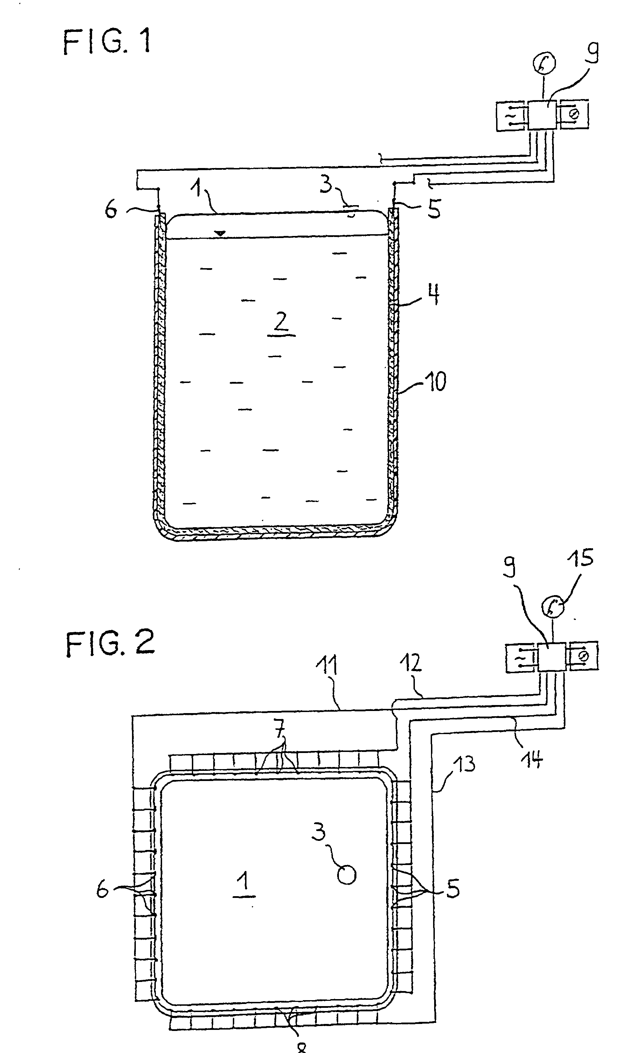

In den Figuren 1 und 2 ist ein Tank 1 darstellt, in dem eine wassergefährdende Flüssigkeit 2, wie z.B. Heizöl oder Kraftstoff gelagert ist. Mit dem Bezugszeichen 3 ist die verschließbare Einfüllöffnung des Tanks 1 bezeichnet.

An der Unterseite und den Seitenwänden des Tanks 1 liegt vollflächig ein Flächengebilde 4 an, das vorzugsweise auf der Basis eines Vliesstoffes mit elektrisch leitfähigen Partikeln und/oder Fasern elektrisch leitfähig ausgerüstet ist. Die Ausrüstung des Flächengebildes 4 ist dabei derart, daß eine elektrische Leitung zwischen beliebigen Punkten des Flächengebildes 4 im wesentlichen über die Oberfläche der Partikeln bzw. Fasern erfolgt. Der spezifische Widerstand der leitfähigen Partikeln bzw. Fasern und deren Masse pro Flächeneinheit sind so abgestimmt, daß das Flächengebilde 4 einen flächenspezifischen elektrischen Widerstand aufweist, der bei Benetzung mit einer elektrisch leitenden Flüssigkeit im Bereich der Benetzung abnimmt und bei Benetzung mit einer elektrisch nicht leitenden Flüssigkeit im Bereich der Benetzung zunimmt.

Das Flächengebilde 4 ist an seinem oberen den Tank 1 umgebenden Rand mit einer Vielzahl von Meßkontakten 5 bis 8 versehen, zwischen denen mit einer automatisierten Meß- und Auswerteeinrichtung 9 der elektrische Widerstand des Flächengebildes zu beliebigen Zeitpunkten gemessen werden kann. Die Meßkontakte 5 bis 8 sind paarweise gruppiert, wobei die einzelnen Paare einerseits parallele und andererseits sich kreuzende Meßabgriffe bilden. Anzahl und Abstand der Meßabgriffe sind dabei so gewählt, daß die Widerstandsverteilung für die gesamte Fläche des Flächengebildes 4 mit ausreichender örtlicher Auflösung ermittelt werden kann.

Alternativ oder zusätzlich zu der in der Zeichnung dargestellten Anordnung können die Meßkontakte auch matrixförmig verteilt an definierten Stellen auf dem Flächengebilde angeordnet sein.

Die in den Figuren 1 und 2 dargestellten Meßkontakte 5 bis 8 sind über Bus-Übertragungsleitungen 11 bis 14 mit der Meß- und Auswerteeinrichtung 9 verbunden. Als Bussystem wird ein hybrides analog-digitales Bussystem verwendet, das ohne eine aufwendige Analog-Digital-Wandlung an den Meßabgriffen auskommt. Dabei werden über den digitalen Teil des Busses Schalter an den Meßkontakten aktiviert, die die analoge Signal- und Datenleitung mit dem Meßkontakt verbinden.

Die Meß- und Auswerteeinrichtung umfaßt eine Anzeigeeinrichtung (nicht gezeigt) beispielsweise in Form eines Monitors, über den der Ort bzw. die Koordinaten einer eventuellen Leckage angezeigt werden. Ferner ist die Meß- und Auswerteeinrichtung 9 mit einer Signaleinrichtung (nicht gezeigt) ausgestattet, die bei Vorhandensein einer Leckage ein akustisches und/oder optisches Alarmsignal abgibt. Darüber hinaus ist die Meß- und Auswerteeinrichtung 9 mit einem Modem 15 zur Fernübertragung der erfaßten Meßdaten versehen.

Ist die Widerstandsverteilung des Flachengebildes 4 im Zeitpunkt vor der Befüllung des Tanks 1, d.h. ohne daß Leckageflüssigkeit auf das Flächengebilde 4 einwirkt, bekannt, so kann uber den Vergleich der zu einem späteren Zeitpunkt gemessenen Widerstandsverteilungen mit der zuerst gemessenen Widerstandsverteilung ein Leckageereignis anhand einer lokalen Erhohung oder Verringerung von Widerstandswerten erkannt werden. Die Änderung von Widerstandswerten ist dabei zunachst auf den Bereich begrenzt, der von der Flüssigkeit benetzt wird, so daß eine Ortung der Leckage möglich ist.

Da nicht auszuschließen ist, daß sich die Leckageflüssigkeit bei weiterer Einwirkung im Kontrollbereich bzw. unterhalb einer zu uberwachenden Abdichtung ausbreitet, so daß eine genaue Ortung nicht mehr möglich ist, wird die Anzahl der Meßzyklen der Meß- und Auswerteeinrichtung so hoch gewählt, daß eine Ermittlung der Widerstandsverteilung unmittelbar beim erstmaligen Auftreten der Leckageflussigkeit erfolgt, noch bevor die Flussigkeit sich großflächig ausgebreitet hat.

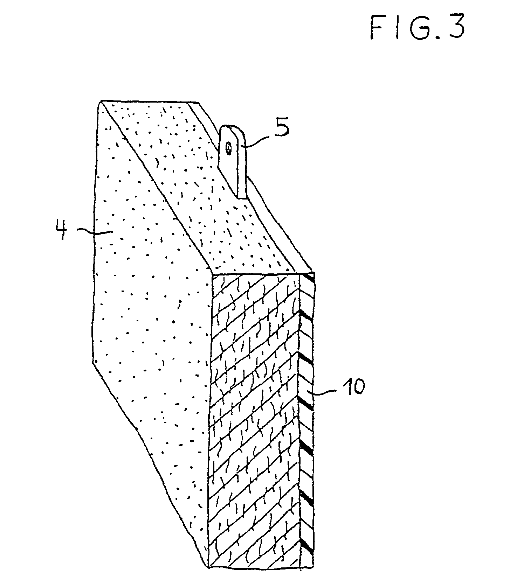

In Figur 3 ist ein Randabschnitt eines erfindungsgemäßen Flächengebildes 4 schematisch dargestellt. Es ist zu erkennen, daß das elektrisch leitfähige Partikeln und/oder Fasern aufweisende Flachengebilde 4 an seinem Rand mit einem einen Meßkontakt bildenden Anschlußselement 5 versehen ist. Ferner weist das Flächengebilde 4 an seiner Außenseite eine flüssigkeitsdichte Beschichtung 10 auf, die beispielsweise aus einer Kunststoffschicht besteht.

Die Anwendung der erfindungsgemaßen Vorrichtung ist nicht allein auf die Lecküberwachung von Behaltern und Abdichtungssystemen beschränkt, sondern eignet sich insbesondere auch zur Uberwachung von Rohrleitungen, in denen wassergefährdende Flüssigkeiten gefördert werden. Zu diesem Zweck wird das in Figur 3 darstellte Flächengebilde 4 streifen- oder bahnförmig hergestellt bzw. zugeschnitten.

Zur Herstellung eines großeren Flächengebildes können mehrere bahnformige Segmente mit einer bestimmten Uberlappung, beispielsweise 5 cm, aneinander gelegt werden. Um eine gute Kontaktierung im Uberlappungsbereich zu erzielen, ist es vorteilhaft, wenn das an der Ober- bzw. Außenseite überlappende Flächengebilde-Segment mit einer Längsfaltung auf den Längsrand des unteren Segments aufgelegt wird und beide Segmente längs des Überlappungsrandes mit einem Klebeband miteinander verklebt werden. Die bahnförmigen Segmente können dabei eine Breite von 2m oder 4m aufweisen.

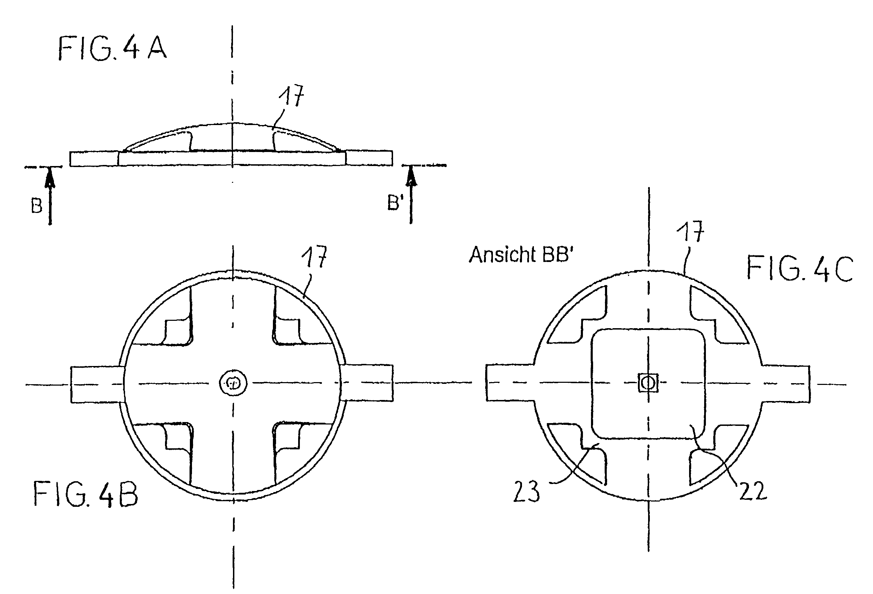

Die Figuren 4A bis 4C zeigen eine Seitenansicht (Fig. 4A), eine Draufsicht (Fig. 4B) und eine Unteransicht (Fig. 4C) einer bevorzugten Ausführungsform eines auf dem Flächengebilde anzuordnenden Meßkontakt-Moduls 17. Die Kontaktfläche des Moduls 17 besteht aus einem leitfähigen Polyurethan-Schaumstoff. Hierdurch wird eine gute Kontaktierung der Meßstellen am Flächengebilde erzielt. Die Meßstellen sind sowohl in den digitalen als auch in den analogen Leitungen des Bussystems in Reihe geschaltet und zusammen mit der Schaltelektronik und einer Kontaktfläche 22 in dem aus Epoxidharz hergestellten Modulgehäuse 23 eingegossen.

## Patentansprüche

1. Vorrichtung zur Detektion und Ortung sowohl von elektrisch leitenden, als auch von elektrisch nicht leitenden Leckageflüssigkeiten an Abdichtungssystemen, **gekennzeichnet durch** ein elektrisch leitfähige Partikel und/oder Fasern aufweisendes, vollflächig an der Außenseite eines zu überwachenden Abdichtungsbereichs angeordnetes Flächengebilde (4), das einen flächenspezifischen elektrischen Widerstand aufweist, der bei Benetzung mit einer elektrisch leitenden Flüssigkeit im Bereich der Benetzung abnimmt und bei Benetzung mit einer elektrisch nicht leitenden Flüssigkeit im Bereich der Benetzung zunimmt, und mit einer Vielzahl von Meßkontakten (5, 6, 7, 8; 17) versehen ist, die über eine oder mehrere Bus-Übertragungsleitungen (11, 12, 13, 14) mit einer Meß- und Auswerteeinrichtung (9) verbunden sind, mit welcher der elektrische Widerstand des Flächengebildes (4) kontinuierlich oder zu vorgegebenen Zeitpunkten meßbar und eine Änderung der örtlichen Widerstandsverteilung innerhalb des Flächengebildes (4) ermittelbar ist.

2. Vorrichtung nach Anspruch 1,
**dadurch gekennzeichnet, daß** das Flächengebilde (4) aus Metall und/oder leitfähigem Kohlenstoff bestehende Partikel und/oder Fasern aufweist.

3. Vorrichtung nach Anspruch 1 oder 2,
**dadurch gekennzeichnet, daß** die elektrische Leitung zwischen beliebigen Punkten des Flächengebildes (4) im wesentlichen über die Oberfläche der Partikel und/oder Fasern erfolgt.

4. Vorrichtung nach einem der vorstehenden Ansprüche,
**dadurch gekennzeichnet, daß** das Flächengebilde (4) außenseitig mit einer flüssigkeitsdichten Beschichtung (10) versehen ist.

5. Vorrichtung nach einem der vorstehenden Ansprüche,
**dadurch gekennzeichnet, daß** Mittel vorgesehen sind, mit denen ein konstanter Meßstrom zumindest über einen Teil des Flächengebildes (4) getrieben werden kann, so daß über die Meßkontakte (5, 6, 7, 8; 17) die Spannungsverteilung in dem stromdurchflossenen Flächengebilde (4) ermittelbar ist.

6. Vorrichtung nach einem der vorstehenden Ansprüche,
**dadurch gekennzeichnet, daß** ferner mindestens eine Gegenelektrode vorgesehen ist, die außerhalb des zu überwachenden Abdichtungsbereichs plazierbar ist, wobei mit der Meß- und Auswerteeinrichtung (9) die Potentialverteilung in Bezug auf die Gegenelektrode meßbar und eine Änderung der Potentialverteilung ermittelbar ist.

7. Vorrichtung nach einem der vorstehenden Ansprüche,
**dadurch gekennzeichnet, daß** die Meßkontakte (5, 6, 7, 8; 17) zur Ankopplung an das Flächengebilde (4) jeweils mit einer Kontaktfläche aus leitfähigem Schaumstoff versehen sind.

8. Vorrichtung nach einem der vorstehenden Ansprüche,
**dadurch gekennzeichnet, daß** die Meßkontakte (5, 6, 7, 8; 17) auf dem Flächengebilde in flächenhafter Verteilung, vorzugsweise matrixförmig angeordnet sind.

9. Vorrichtung nach einem der vorstehenden Ansprüche,
**dadurch gekennzeichnet, daß** zur Abfrage der Meßkontakte (5, 6, 7, 8; 17) ein hybrides analog-digitales Bussystem vorgesehen ist, dessen digitale und analoge Leitungen in Reihe geschaltet sind, wobei über den digitalen Anteil des Busses an den Meßkontakten Schalter aktivierbar sind, die die analogen Signal- und Datenleitungen mit dem jeweiligen Meßkontakt (5, 6, 7, 8; 17) verbinden.

## Claims

1. A device for detecting and locating both electrically conductive and electrically non-conductive leakage fluids in sealing systems, **characterised by** a sheetlike structure (4) comprising electrically conductive particles and/or fibres, said structure being arranged all over the exterior of a sealing area to be monitored, and comprising an area-specific electrical resistance; said resistance decreases in the area of wetting when wetted with an electrically conductive liquid, and said resistance increases in the area of wetting when wetted with an electrically non-conductive liquid; with the sheetlike structure comprising a plurality of measuring contacts (5, 6, 7, 8; 17) which are connected via one or several bus transmission lines (11, 12, 13, 14) to a measuring and evaluation device (9) by means of which the electrical resistance of the sheetlike structure (4) can be measured either continuously or at specified times, and a change of the local resistance distribution within the sheetlike structure (4) can be determined.

2. A device according to claim 1, **characterised in that** the sheetlike structure (4) comprises particles and/ or fibres made of metal and/or conductive carbon.

3. A device according to claim 1 or 2, **characterised in that** electrical conduction takes place between any points in the sheetlike structure (4), essentially via the surface of the particles and/or fibres.

4. A device according to one of the preceding claims, **characterised in that** on the outside the sheetlike structure (4) comprises a liquid-impermeable layer (10).

5. A device according to one of the preceding claims, **characterised in that** means are provided by which a constant measuring current can be sent across at least part of the sheetlike structure, so that the voltage distribution in the sheetlike structure (4) in which current flows, can be determined via the measuring contacts (5, 6, 7, 8; 17).

6. A device according to one of the preceding claims, **characterised in that** at least one counter electrode is provided which can be located outside the sealing area to be monitored, whereby with the measuring and evaluation device (9) the potential distribution can be measured in relation to the counter electrode, and a change of the potential distribution can be determined.

7. A device according to one of the preceding claims, **characterised in that** each of the measuring contacts (5, 6, 7, 8; 17) comprises a contact surface made of conductive foam material for coupling to the sheetlike structure (4).

8. A device according to one of the preceding claims, **characterised in that** the measuring contacts (5, 6, 7, 8; 17) are arranged spread out, preferably in a matrix-like arrangement.

9. A device according to one of the preceding claims, **characterised in that** for interrogating the measuring contacts (5, 6, 7, 8; 17) a hybrid analog-digital bus system is provided whose digital and analog lines are series-connected, with switches at the measuring contacts being able to be activated via the digital part of the bus, said switches connecting the analogue signal and data lines to the respective measuring contact (5, 6, 7, 8; 17).

## Revendications

1. Dispositif pour détecter et localiser des liquides de fuite électriquement conducteurs ainsi que des liquides de fuite électriquement non conducteurs dans des systèmes d'étanchéité,
**caractérisé par** une structure plane (4) qui comporte des particules et/ou des fibres électriquement conductrices et est disposée par toute sa surface sur la face extérieure d'une zone d'étanchéité à contrôler, et qui possède une résistance électrique surfacique qui, lors du mouillage par un liquide électriquement conducteur, diminue dans la zone de mouillage et qui, lors du mouillage par un liquide non électriquement conducteur, augmente dans la zone de mouillage, et comportant une multiplicité de contacts de mesure (5, 6, 7, 8; 17) qui sont reliés par l'intermédiaire d'une ou de plusieurs lignes de transmission formant bus (11, 12, 13, 14), à un dispositif de mesure et d'évaluation (9), au moyen duquel la résistance électrique de la structure plane (4) est mesurée continûment ou à des instants prédéterminés, et une variation de la distribution locale de résistance à l'intérieur de la structure plane (4) peut être déterminée.

2. Dispositif selon la revendication 1, **caractérisé en ce que** la structure plane (4) comporte des particules et/ou des fibres constituées d'un métal et/ou de carbone conducteur.

3. Dispositif selon la revendication 1 ou 2, **caractérisé en ce que** la conduction électrique entre des points quelconques de la structure plane (4) est obtenue essentiellement par l'intermédiaire de la surface des particules et/ou des fibres.

4. Dispositif selon l'une des revendications précédentes, **caractérisé en ce que** la structure plane (4) comporte extérieurement un revêtement (10) étanche aux liquides.

5. Dispositif selon l'une des revendications précédentes, **caractérisé en ce qu'**il est prévu des moyens à l'aide desquels un courant de mesure constant peut être transmis par l'intermédiaire d'au moins une partie de la structure plane (4) de sorte que la distribution de voltage dans la structure plane (4) traversée par le courant peut être déterminée par l'intermédiaire des points de contact (5, 6, 7, 8; 17).

6. Dispositif selon l'une des revendications précédentes, **caractérisé en ce qu'**il est en outre prévu au moins une contre-électrode, qui peut être placée à l'extérieur de la zone d'étanchéité à contrôler, auquel cas avec le dispositif de mesure et d'évaluation (9), la distribution de potentiel peut être mesurée par rapport à la contre-électrode et une variation de la distribution de potentiel peut être déterminée.

7. Dispositif selon l'une des revendications précédentes, **caractérisé en ce que** les contacts de mesure (5, 6, 7, 8; 17) comportent, pour le couplage à la structure plane (4), respectivement une surface de contact formée d'un matériau mousse conducteur.

8. Dispositif selon l'une des revendications précédentes, **caractérisé en ce que** les contacts de mesure (5, 6, 7, 8; 17) sont disposés sur la structure plane selon une distribution plane, de préférence sous la forme d'une matrice.

9. Dispositif selon l'une des revendications précédentes, **caractérisé en ce que** pour interroger les contacts de mesure (5, 6, 7, 8; 17) il est prévu un système de bus hybride analogique-numérique, dont les lignes numériques et analogiques sont branchées en série, des interrupteurs, qui relient les lignes analogiques de transmission de signaux et de données au contact de mesure respectif pouvant être activés par la partie numérique du bus au niveau des contacts de mesure (5, 6, 7, 8; 17).
